# EUROPEAN PATENT APPLICATION

(11) **EP 1 880 809 A1**
(43) Date of publication of application: **23.01.2008**
(21) Application number: 07011872.4
(22) Date of filing: 18.06.2007
(51) Int. Cl.: B25J 9/00, B25J 17/02

(54) **Arm structure of industrial robot**

(30) Priority: 20.07.2006 JP 2006197952
(71) Applicant: Fanuc Ltd, Minamitsuru-gun, Yamanashi 401-0597 (JP)
(72) Inventor: Yasumura, Mitsuhiro, Yamanashi 401-0302 (JP); Yamashiro, Hiraku, Fuefuki-shi Yamanashi 406-0834 (JP); Matsui, Hideo, Minamitsuru-gun Yamanashi 401-0511 (JP)
(74) Representative: Thum, Bernhard

(57) **Abstract**

An arm structure (10) of an industrial robot includes a wrist unit (61) rotatable around a first axis (X) and a second axis (Y) perpendicular to the first axis and an arm unit (10') for supporting the wrist unit rotatably around the first axis. The arm unit has a bottom casing (12), which in turn has arranged thereon at least a first motor (31) used to rotate the wrist unit around the first axis and a second motor (32) used to rotate the wrist unit around the second axis. Further, the arm unit has a cover casing (11) engaged with the bottom casing perpendicular to a plane containing the output shafts of the motors. As a result, the casing of the arm structure is reduced in both weight and size.

## Description

### BACKGROUND OF THE INVENTION

### 1. Field of the Invention

This invention relates to the arm structure of an industrial robot.

### 2. Description of the Related Art

An industrial robot is used to transport or set a workpiece in position with a hand or the like arranged at the forward end of an arm, which can perform a predetermined job by being equipped with a predetermined tool in place of the hand.

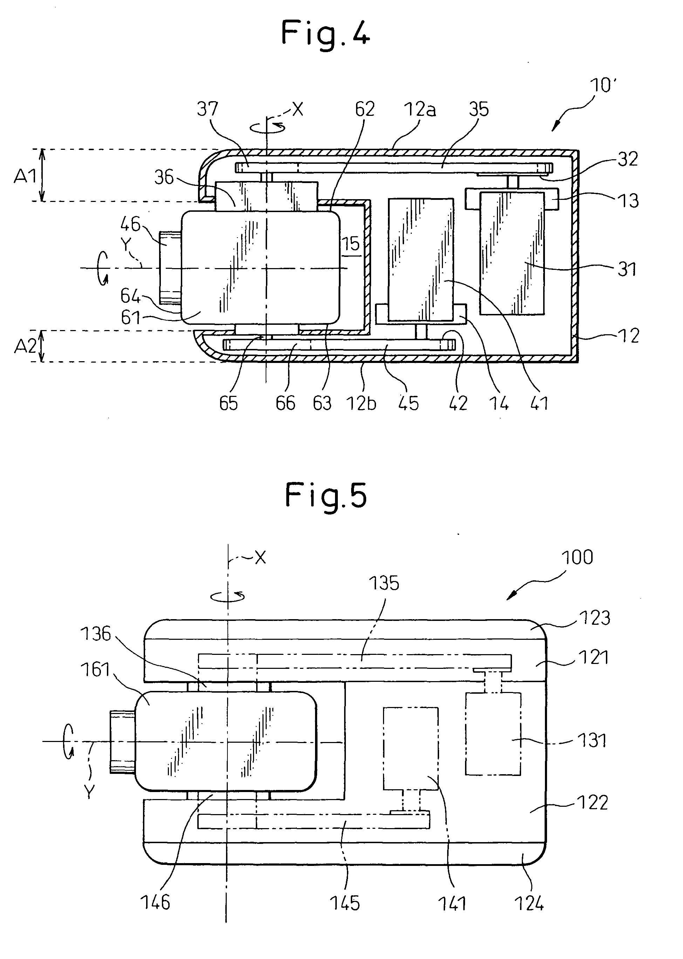

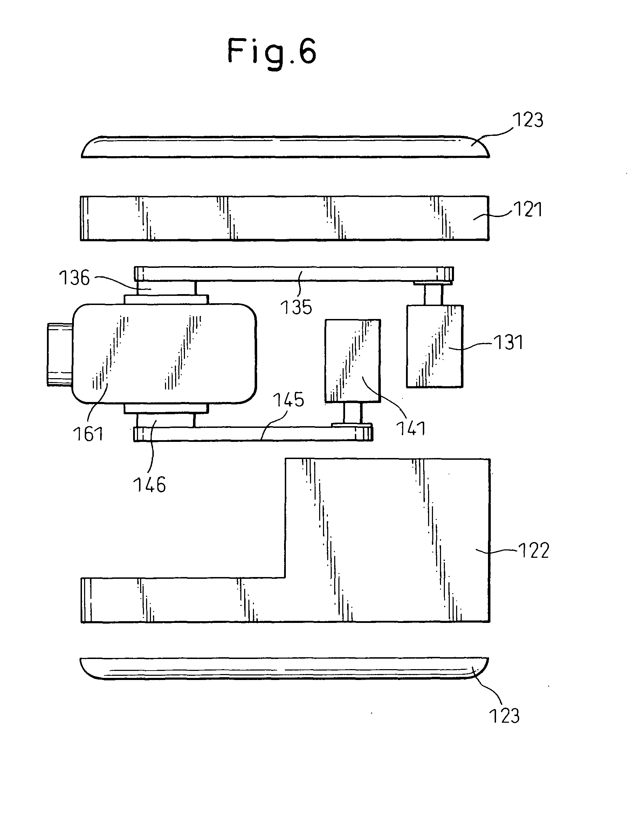

Fig. 5 is a plan view showing an arm structure of a robot according to the prior art, and Fig. 6 is an exploded view of the arm structure shown in Fig. 5. As shown in these drawings, the arm structure 100 has a wrist unit 161 rotatable around a first axis X and a second axis Y. As shown in these drawings, the wrist unit 161 is rotatably supported in the gap formed between the substantially linear first casing portion 121 and the substantially L-shaped second casing portion 122 adjoining the first casing portion 121.

Drive units 136, 146 for the first axis X and the second axis Y, respectively, are arranged on the two sides of the wrist unit 161. Rotational power from a first motor 131 and second motor 141 are transmitted to the drive units 136, 146 via rotary belt/pulley mechanisms 135, 145, respectively.

As can be seen Fig. 5, the rotary belt/pulley mechanism 135 is arranged in the first casing portion 121, and the rotary belt/pulley mechanism 145 is arranged in the second casing portion 122 together with the first and second motors 131, 142.

Further, a cover casing portion 123 is mounted on the edge of the first casing portion 121 arranged on the side far from the second casing portion 122. In a similar fashion, a cover casing portion 124 is mounted on the edge of the second casing portion 122 on the side far from the first casing portion 121. Specifically, the casing of the conventional arm structure 100 shown in Figs. 5, 6 has four casing portions 121 to 124 assembled transversely of the arm structure 100.

Further, Japanese Unexamined Patent Publication No. 7-40280 discloses an arm structure having a casing including a central casing and an arm cover mounted on each side of the central casing. Specifically, the casing of the arm structure described in Japanese Unexamined Patent Publication No. 7-40280 has three casing portions assembled transversely of the arm structure 100.

As described above, the number of parts (casing portions) comprising the casing of the conventional arm structure are comparatively numerous. Therefore, in the prior art, the weight and size of the casing of the arm structure cannot be easily reduced.

This invention has been achieved in view of the aforementioned situation, and the object thereof is to provide an arm structure of an industrial robot in which the casing of the arm structure can be reduced in weight and size.

### SUMMARY OF THE INVENTION

In order to achieve the object described above, according to a first aspect of the invention, there is provided an arm structure of an industrial robot, comprising a wrist unit rotatable around a first axis and a second axis perpendicular to the first axis and an arm unit supporting the wrist unit rotatably around the first axis, wherein the arm unit has a bottom casing supporting at least a first motor used to rotate the wrist unit around the first axis and a second motor used to rotate the wrist unit around the second axis, and wherein the arm unit has a cover casing engaging the bottom casing in the direction perpendicular to a plane containing the output shafts of both the first and second motors.

Specifically, in the first aspect, the casing of the arm structure is formed of two casing portions, i.e. the bottom casing and the cover casing. Unlike in the conventional technique which uses three or four casing portions, the width of the arm structure can be reduced by at least the thickness of the casing portions, with the result that the casing can be reduced in both weight and size.

According to a second aspect of the invention, there is provided an arm structure of an industrial robot as in the first aspect, wherein at least one of the above wrist unit, the first motor and the second motor becomes removable when removing the cover casing from the bottom casing.

Specifically, in the second aspect, assembly and maintenance of the wrist unit, etc. can be easily carried out.

According to a third aspect of the invention, there is provided an arm structure of an industrial robot as in the first or second aspect, wherein the cover casing engages the bottom casing in the same direction as the assembling direction of at least one of the wrist unit, the first motor and the second motor.

Specifically, in the third aspect, since the arm structure can be assembled in one direction, it is advantageous for automatic assembly.

According to a fourth aspect of the invention, there is provided an arm structure of an industrial robot as in any of the first to third aspects, wherein a first rest for arranging the first motor on the bottom casing and a second rest for arranging the second motor on the bottom casing are formed integrally with the bottom casing on the inner surface of the bottom casing.

Specifically, in the fourth aspect, the parts required for the rests do not need be prepared separately.

According to a fifth aspect of the invention, there is provided an arm structure of an industrial robot as in any of the first to fourth aspects, wherein a first power transmission means for transmitting rotational power of the first motor to the wrist unit and a second power transmission means for transmitting rotational power of the second motor to the wrist unit are supported on the bottom casing.

According to a sixth aspect of the invention, there is provided an arm structure of an industrial robot as in the fifth aspect, wherein at least one of the first and second power transmission means includes a rotary belt and a pulley.

Specifically, in the sixth aspect, the first and second power transmission means can be relatively easily formed. Further, since the rotary belt and the pulley are lightweight and simple, the arm structure can be further reduced in weight and size.

According to a seventh aspect of the invention, there is provided an arm structure of an industrial robot as in the fifth or sixth aspect, wherein the wrist unit includes a first drive means for driving the wrist unit around the first axis and a second drive means for driving the wrist unit around the second axis, wherein the first and second power transmission means transmit the rotational power of the first and second motors to the first and second drive means, respective of the wrist unit, and wherein the first drive means is arranged on one side of the wrist unit and the second power transmission means on the other side of the wrist unit.

Specifically, in the seventh aspect, only the second power transmission means not the second drive means is arranged on the other side of the wrist unit. Therefore, the arm structure can be further reduced in width by an amount corresponding to the size of the second drive unit.

The above and other objects, features and advantages of the invention will be made more apparent by the detailed description of typical embodiments thereof taken in conjunction with the accompanying drawings.

### BRIEF DESCRIPTION OF THE DRAWINGS

Fig. 1 is a perspective view showing an overall structure of an industrial robot.
Fig. 2 is a perspective view of an arm structure according to the invention.
Fig. 3 is an exploded view of the arm structure shown in Fig. 2.
Fig. 4 is a plan view of an arm structure with the cover casing removed.
Fig. 5 is a plan view showing the conventional arm structure of a robot.
Fig. 6 is an exploded view of the arm structure shown in Fig. 5.

### DETAILED DESCRIPTION

An embodiment of the invention is explained below with reference to the accompanying drawings. In the drawings, the same component members are designated by like reference numerals, respectively. To facilitate understanding, the scale of these drawings has been changed appropriately.

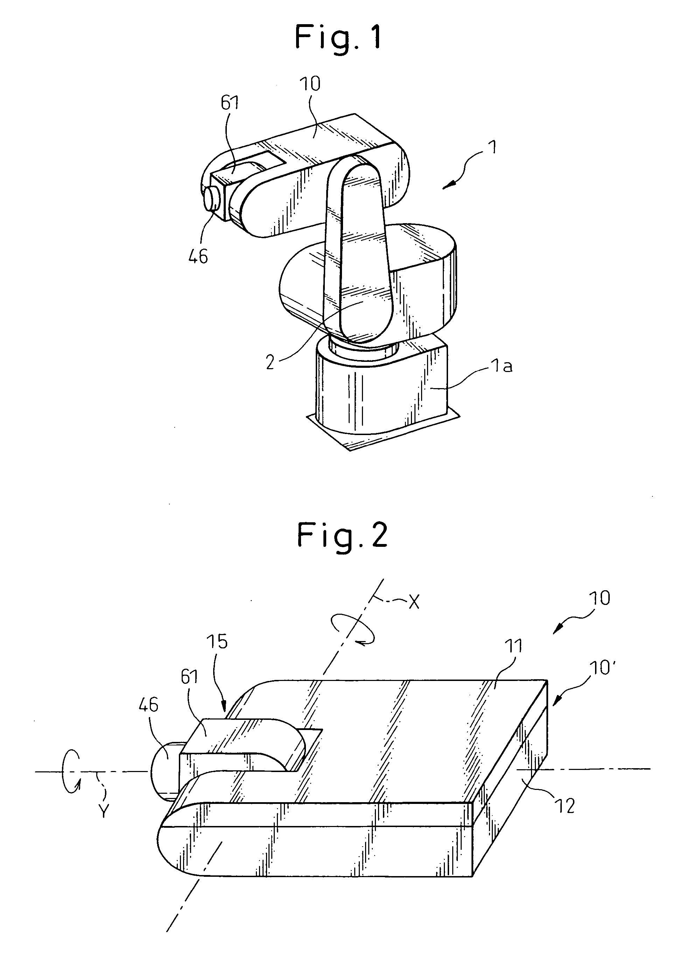

Fig. 1 is a perspective view showing an overall structure of an industrial robot. The robot 1 shown in Fig. 1 is a 5-axis vertical multijoint robot. Arms 2 and 10 are coupled in that order on the top of the base portion 1a of the robot 1. As shown in Fig. 1, a wrist unit 61 is arranged at the forward end of the arm 10. This industrial robot transports or places workpieces (not shown) in a position or performs various jobs in response to input commands sent in accordance with a predetermined program from an external robot control unit (not shown).

Fig. 2 is a perspective view of the arm structure according to the invention. As shown, the casing of the arm structure 10 includes two parts, i.e. a substantially U-shaped bottom casing 12 and a cover casing 11 having a corresponding shape.

The cover casing 11 engages the bottom casing 12 by snap-fitting or the like. As an alternative, the cover casing 11 may be engaged with the bottom casing 12 by a fastening means, such as a screw (not shown).

As shown, a recess 15 is formed in the U-shaped casings 11, 12. The wrist unit 61 supported in the recess 15 can rotate around the first axis X along the width of the arm structure 10 and the second axis Y (perpendicular to the first axis X) along the length of the arm structure 10. Incidentally, the portion of the arm structure other than the wrist unit 61 is sometimes referred to as an arm unit 10'.

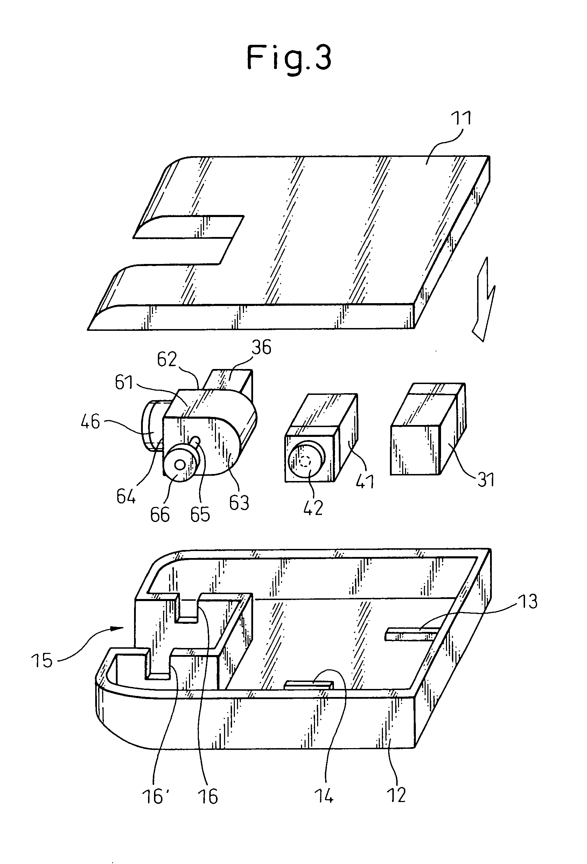

Fig. 3 is an exploded view of the arm structure shown in Fig. 2, and Fig. 4 a plan view of the arm structure with the cover casing removed. As can be seen from these drawings, a drive unit 36 for the first axis X is attached to one side 62 of the wrist unit 61, and a drive unit 46 for the second axis Y is attached to a front end portion 64 of the wrist unit 61. The drive unit 36 is projected in the direction along the first axis X from the one side 62, while a drive unit 46 is projected in the direction along the second axis Y from the front end portion 64. The drive units 36, 46 may be a kind of a transmission mechanism and/or speed reducer including a plurality of gears (not shown). A part of the drive unit 46 is projected from the other side 63 of the wrist unit 61 as a shaft 65.

As shown in Fig. 3, supporting portions 16, 16', for example notches, opposed to each other to support the wrist unit 61 are formed in the recess 15 of the bottom casing 12. The wrist unit 61 is arranged on the bottom casing 12 in such a manner that the shaft 65 and a part of the drive unit 36 engage the supporting portions 16, 16'.

Especially, according to this invention, the two sides of the wrist unit 61, when mounted to the bottom casing 12, can be supported on the supporting portions 16, 16' at the same time. In contrast, according to the prior art, the wrist unit 161 is engaged with the first casing portion 121 while being supported on the second casing portion 122 in a cantilever fashion. Therefore, according to this invention, it is understood that the wrist unit 61 can be easily supported on the bottom casing 12.

Further, the bottom casing 12 has arranged thereon a first motor 31 used for driving the drive unit 36 and a second motor 41 used for driving the drive unit 46. These motors 31, 41 are servo motors, for example, and are arranged opposed to each other as shown.

For this purpose, a first rest 13 for supporting the first motor 31 and a second rest 14 for supporting the second motor 41 are formed on the inner bottom surface of the bottom casing 12 integrally therewith. As shown, the forward end of each of the first motor 31 and the second motor 41 is set in position on the rests 13, 14. Since the rests 13, 14 are formed integrally with the bottom casing 12, no additional parts for the rests 13, 14 are required in this invention.

The motors 31, 41, unlike conventional motors 131, 141, are not required to be inserted through an opening formed on the side of the second casing portion 122. Therefore, according to this invention, the motors 31, 41 can be easily mounted.

In the arm structure 10 according to the invention, the operator can access and mount/demount the wrist unit 61, the first and second motors 31, 41 and the related members thereof in the bottom casing 12 by removing the cover casing 11 from the bottom casing 12. Therefore, according to this invention, the maintenance on the arm structure 10 can be easily carried out.

Further, as shown, the cover casing 11 is engaged in the direction perpendicular to the plane containing the output shafts of both the first and second motors 31, 41. In addition, the cover casing 11 is engaged in the same direction as the wrist unit 61, etc. is assembled. Therefore, according to this invention, the arm structure 10 can be assembled by moving the parts (the cover casing 11, the wrist unit 61, etc.) in a single assembling direction, and as a result, the arm structure 10 according to the invention has an advantage especially for automatic assembly by other robots.

Referring to Fig. 4, a pulley 32 is attached to the output shaft of the first motor 41, and a pulley 37 to the output shaft of the drive unit 36. A rotary belt 35 is suspended on the pulleys 32, 37, so that the rotational power of the first motor 31 is transmitted to the drive unit 36 via the pulleys 32, 37 and the rotary belt 35, and as a result, the wrist unit 61 can be rotated around the first axis X to the arm unit 10'.

In a similar fashion, a pulley 42 is attached to the output shaft of the second motor 41, and the rotary belt 45 is suspended on the pulley 42 and the pulley 66 of the shaft 65. The rotating power of the second motor 41 is transmitted to the drive unit 46 via the pulleys 42, 66 and the rotary belt 45, and as a result, the wrist unit 61 can be rotated around the second axis Y to the arm unit 10'. Incidentally, the rotary belts 35, 45 are not shown in Fig. 3 for simplification.

As described above, according to this invention, the casing of the arm structure 10 is formed of the cover casing 11 and the bottom casing 12. Unlike a conventional arm structure formed of three or four casing portions, the arm structure 10 according to the invention can be reduced in width (size along the first axis X). Thus, the casing of the arm structure 10 can be reduced in both weight and size. Also, according to the invention, the casing of the arm structure 10 includes only the cover casing 11 and the bottom casing 12, and therefore can be easily assembled by moving the cover casing 11 toward the bottom casing 12.

As described above, according to this invention, the drive unit 36 is arranged on one side 62 of the wrist unit 61, and the drive unit 46 at the end portion 64 of the wrist unit 61. Therefore, the drive unit 36 and the pulley 37 are required to be arranged between the one side 12a of the bottom casing 12 and the recess 15, while only the pulley 66 may be arranged between the other side 12b of the bottom casing 12 and the recess 15. In other words, the distance A1 between one side 12a of the bottom casing 12 and the recess 15 is larger than the distance A2 between the other side 12b of the bottom casing 12 and the recess 15. Therefore, according to the invention, the arm structure 10 can be further reduced in width by an amount corresponding to the size of the second drive unit 46.

The embodiments described above concerns the arm structure 10 that is also included in the 5-axis vertical multijoint robot. Nevertheless, it would be apparent to those skilled in the art that the arm structure 10 according to the invention is also applicable to other types of robots, such as a 6-axis vertical multijoint robot with equal effect.

Although the invention is described above with reference to a typical embodiment thereof, it can be understood by those skilled in the art that the aforementioned and various other modifications, omissions and additions are possible without departing from the scope of the invention.

## Claims

1. An arm structure of an industrial robot, comprising a wrist unit (61) rotatable around a first axis and a second axis perpendicular to the first axis and an arm unit (10') for supporting the wrist unit (61) rotatably around the first axis; **characterized in that**
wherein the arm unit (10') has a bottom casing (12) for supporting at least a first motor (31) used to rotate the wrist unit (61) around the first axis and a second motor (41) used to rotate the wrist unit (61) around the second axis; and
wherein the arm unit (10') has a cover casing (11) engaging the bottom casing (12) in the direction perpendicular to a plane containing the output shafts of both the first and second motors (31, 41).

2. The arm structure according to claim 1,
wherein at least one of the wrist unit (61), the first motor (31) and the second motor (41) is set in a removable state when removing the cover casing (11) from the bottom casing (12).

3. The arm structure according to claim 1 or 2,
wherein the cover casing (11) engages the bottom casing (12) in the same direction as at least one of assembling direction of the wrist unit (61), the first motor (31) and the second motor (41).

4. The arm structure according to any one of claims 1 to 3,
wherein a first rest for arranging the first motor (31) on the bottom casing (12) and a second rest for arranging the second motor (41) on the bottom casing (12) are formed on the inner surface of the bottom casing (12) integrally therewith.

5. The arm structure according to any one of claims 1 to 4,
wherein a first power transmission means for transmitting a rotational power of the first motor (31) to the wrist unit (61) and a second power transmission means for transmitting a rotating power the second motor (41) to the wrist unit (61) are supported on the bottom casing (12).

6. The arm structure according to claim 5,
wherein at least one of the first and second power transmission means includes a rotary belt and a pulley.

7. The arm structure according to claim 5 or 6,
wherein the wrist unit (61) includes a first drive means for driving the wrist unit (61) around the first axis and a second drive means for driving the wrist unit (61) around the second axis,
wherein the first and second power transmission means transmit the rotational power of the first and second motors (31, 41) to the first and second drive means, respectively, of the wrist unit (61), and
wherein the first drive means is arranged on one side of the wrist unit (61) and the second power transmission means on the other side of the wrist unit (61).
